Europäisches Patentamt

European Patent Office

Office européen des brevets

(11) Publication number: **0 516 207 A1**

## (12) EUROPEAN PATENT APPLICATION

(21) Application number: **92201289.3**

(22) Date of filing: **07.05.92**

(51) Int. Cl.5: **B42B 5/10**, B29C 61/06,
B29C 69/00

(30) Priority: **13.05.91 BE 9100439**

(43) Date of publication of application:
**02.12.92 Bulletin 92/49**

(84) Designated Contracting States:
**AT BE CH DE DK ES FR GB GR IT LI LU MC
NL PT SE**

(71) Applicant: **UNIBIND (CYPRUS) LIMITED
Margarita House 15, Them. Dervis Street
Nicosia 136(CY)**

(72) Inventor: **Peleman,Guido
Jan Van Rijswijcklaan 76
B-2018 Antwerpen(BE)**

(74) Representative: **Donné, Eddy
Bureau M.F.J. Bockstael nv Arenbergstraat
13
B-2000 Antwerpen(BE)**

(54) Method for the realization of binding elements.

(57) Method for the realization of binding elements, characterised in that one starts from a synthetic tube (4); the lengthwise cutting of this tube (4); the feeding through a mould (6) of the cut tube (4) in order to obtain a cylindrical element (7) with overlapping edges (8-9); the heating of the thus obtained cylindrical element (7) to fix it in the latter shape; the reshaping of the cylindrical element (7) to a flat strip (13); the making in this strip (13) of teeth (3) and the eventual release of the above mentioned flat strip (13), so that the latter automatically returns to the above mentioned fixed condition.

Fig. 3

This invention relates to a method for the realization of binding elements, more specifically binding backs, in other words means to bind documents, whereby to that end the binding elements are formed by a cylindrical element with overlapping free edges, one of which is fitted with teeth which can penetrate in the documents, or the like, to be bound.

Traditionally the above mentioned binding elements are realized starting from a flat thin strip of polyvinyl chloride to which the required profile is applied, normally through cutting, after which the profiled strip is heated and rolled around a stave in order to obtain that an above mentioned cylindrical element with overlapping edges is obtained.

This known method is very labour intensive, due, amongst other things, to the fact chat the realization of such binding elements is done manually, which makes the cost price of the finished product very high.

Another disadvantage of this method is that one starts with a flat strip which has to he deformed cylindrically lengthwise so that, against the memory of the synthetic material which normally tries to return to the flat shape, a deformation has to he obtained and maintained.

In order to avoid the above disadvantages it has already been suggested to realize such binding elements by extruding a cylindrical element with overlapping edges; the reshaping of this cylindrical element to a flat strip; the realization of teeth in this strip; and the release of the above mentioned flat strip, so that the latter automatically returns to its cylindrical shape.

Although the latter method allows the use of a very simple installation for the realization of such binding elements, which makes the cost price very low, and one starts from a cylindrical element the shape, respectively the memory, of which corresponds to that of the cylindrical binding element to be manufactured, so that at any time it automatically tries to maintain the 'memory' shape and such a binding element during its extrusion can easily be fitted with flat parts, label holders etc. and finally, by starting from an extruded cylindrical element, synthetic materials, such as polyvinyl chloride, polystyrene, polypropylene etc., can be used, in other words also elastic synthetic materials, it has been established that, in certain circumstances, the binding elements according to the invention can be realized in such a way that, whilst maintaining all the above mentioned advantages of the known method, the cost price of the binding elements according to the present invention can be even further reduced.

To this end the method according to this invention for the realization of binding elements mainly consists in that one starts with a synthetic tube; that this tube is cut lengthwise; that the pre-cut tube is guided through a mould in order to obtain a cylindrical element with overlapping edges; that the resulting cylindrical element is heated in order to fix it in the latter position; that the cylindrical element is reshaped to a flat strip; that teeth are made n this strip; and that finally the above mentioned flat strip is released, so that the latter automatically returns to the above mentioned fixed shape.

In order to better demonstrate the characteristics of the invention, the method according to the invention is described hereafter, as an example without any restrictive character, with reference to the drawings, wherein:

figure 1 is a representation in perspective of a binding element according to the invention;

figure 2 represents a cross-section according to line II-II in figure 1;

figure 3 is a schematic representation in perspective of a method according to the invention;

figures 4 to 7 respectively are cross-sections according to lines IV-IV, V-V, VI-VI and VII-VII in figure 3;

figures 8 and 9 are a representation in perspective of special designs of a binding element obtained from the method according to the invention.

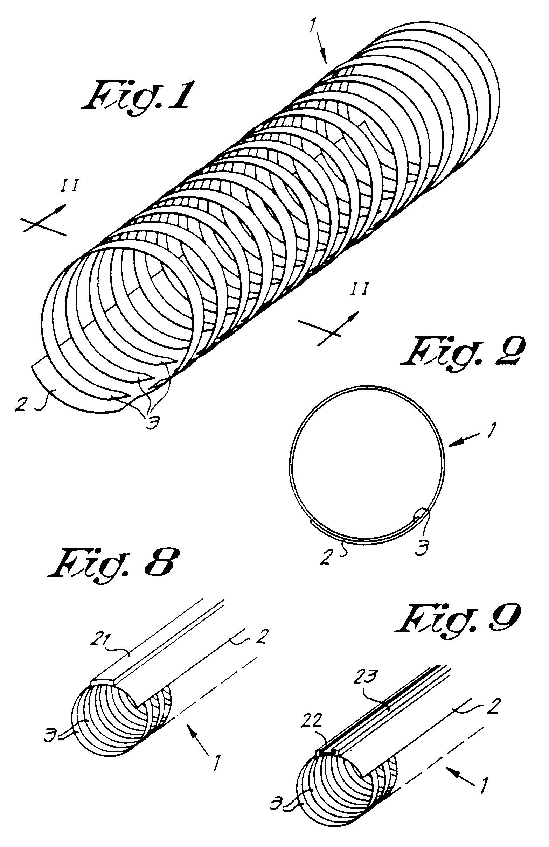

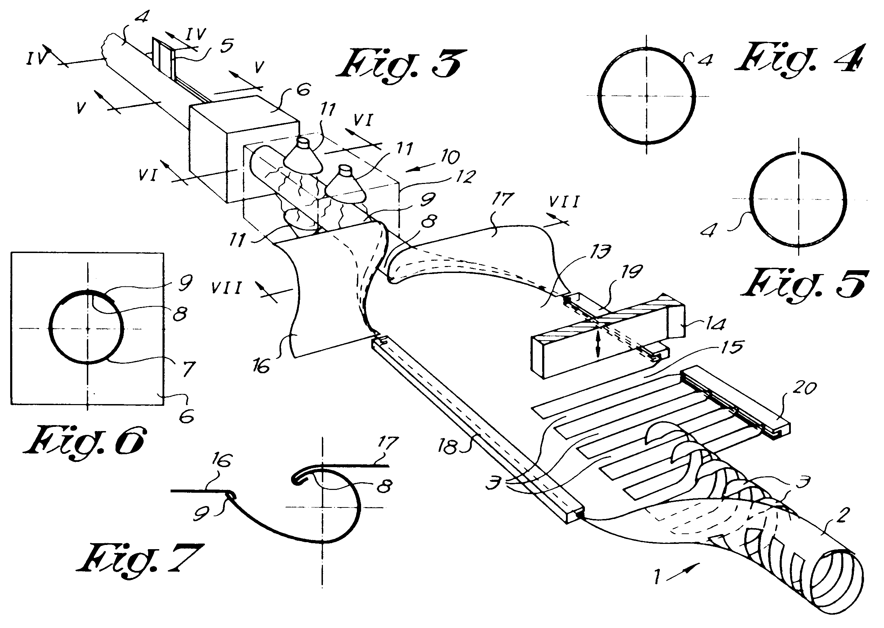

Figures 1 and 2 represent a cylindrical element 1 which is shaped in a known way by a back 2 which is provided on one edge with teeth 3, spaced in the right way and intended to join with perforations provided to this end in the documents to be bound.

Figure 3 is a schematic representation of the method according to the invention.

The starting point is a tube 4 with the right diameter in any synthetic material desired, which will be cut lengthwise by means of a knife or the like 5 and the cut tube is fed through a mould 6, in order to reshape the tube 4 to a cylindrical element 7 with overlapping edges 8 and 9.

The mould S will preferably be of the cold type, whereby in that case an installation 1Ø, which fixes the obtained shape of the cylindrical element 7, is set up behind the mould 6. This installation 1Ø can consist for example of infra-red lamps 11, which are preferably situated in a closed covering 12, through which the cylindrical element 7 passes.

After the element has thus been made into its finally desired shape, it will be folded open until a flat strip 13 is obtained, after which a suitable cutting element 14 will be used to cut parts 15 from the strip 13 in order to shape teeth 3.

When these teeth 3 are formed, the strip 13 is released so that it automatically returns to its original shape, in such a way that at this point in time a binding element as described in figure 1 is automatically obtained.

The schematic representation of the installation in figure 3 further consists of guides 16-17, which unfold the cylindrical element 7 and guides 18 and 19-2∅ which hold the strip 13 open.

It is clear that the tube 4 can consist either of an existing tube or of a tube extruded some distance from the knife 5, whereby in both cases the tube 4 can be provided with various facilities as for example a flat part 21 as represented in figure 8, a label holder formed for example by L-shaped guides 22-23 as represented in figure 9, etc.

It is self-evident that the present invention is in no way limited to the embodiments described in the examples above and represented in the enclosed drawings; the method according to the invention can be applied in various different combinations and can be obtained by any means without leaving the scope of the invention.

## Claims

1. Method for the realization of binding elements, characterized in that one starts from a tube (4) in synthetic material; the lengthwise cutting of this tube (4); the feeding of the cut tube (4) through a mould (6) in order to obtain a cylindrical element (7) with overlapping edges (8-9); the heating of the thus obtained cylindrical element (7) to fix it in the latter shape; the reshaping of the cylindrical element (7) to a flat strip (13); the m aking of teeth (3) in this strip (13) and the eventual release of the above mentioned flat strip (13), so that the latter automatically returns to the above mentioned fixed condition.

2. Method according to claim 1, characterised in that the tube (4) is cut lengthwise by means of a knife (5).

3. Method according to claim 1, characterized in that the mould (7) is of the cold type.

4. Method according to claim 1, characterised in that the cylindrical element (7) is fixed in its position with overlapping edges (8-9) by heating.

5. Method according to claim 4, characterised in that the heating is done by means of infra-red radiation.

6. Method according to claim 1, characterised in that the above mentioned teeth (3) are obtained by cutting away intermediate parts (15).

7. Method according to any of the above claims characterized in that the tube (4) is provided with a flat part (21) at the place where the back (2) of the binding element (1) is formed.

8. Method according to any of claims 1 to 6, characterised in that the tube (4) is provided with a label holder (22-23) at the place where the back (2) of the binding element (1) is formed.

Fig.1

Fig. 2

Fig. 8

Fig. 9

Fig. 3

Fig. 4

Fig. 5

Fig. 6

Fig. 7

EP 0 516 207 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 491 528 (SPINNER)<br>* column 1, line 1 - line 30; figures *<br>--- | 1-8 | B42B5/10<br>B29C61/06<br>B29C69/00 |
| Y | US-A-3 483 285 (FOLEY)<br>* column 1, line 42 - line 58; figures 3-5 *<br>--- | 1-8 | |
| A | US-A-2 645 816 (TRUSSELL)<br>* column 2, line 27 - line 33 *<br>* column 3, line 3 - line 17; figures 1-7 *<br>--- | 1 | |
| A | GB-A-669 752 (CRAMP)<br>* page 1, line 53 - line 64 *<br>* page 5, line 68 - line 83; figures 4-6 *<br>--- | 1,2 | |
| A | CH-A-364 763 (GENERAL BINDING CORPORATION)<br>* page 1, line 47 - line 53; figure 4 *<br>--- | 7,8 | |
| A | US-A-4 137 289 (STAATS)<br>* column 1, line 48 - line 54; figures 2,3,8 *<br>--- | 7,8 | |
| A | NL-A-7 713 055 (STAMICARBON B.V.)<br>* page 2, line 24 - line 29 *<br>* page 5, line 24 - line 26; claim 5 *<br>* figures 1,4 *<br>--- | 1,4-6 | TECHNICAL FIELDS SEARCHED (Int. Cl.5)<br><br>B42B<br>B42F<br>B29C |
| A | US-A-4 226 046 (OELHOME)<br>* figures *<br><br>----- | 1,2 | |

The present search report has been drawn up for all claims

| Place of search | Date of completion of the search | Examiner |
|---|---|---|
| THE HAGUE | 13 AUGUST 1992 | SCHÖLVINCK T.S. |

EPO FORM 1503 03.82 (P0401)